# EUROPEAN PATENT SPECIFICATION

(11) **EP 1 748 167 B1**
(45) Date of publication and mention of the grant of the patent: **26.03.2014**
(21) Application number: 06013760.1
(22) Date of filing: 03.07.2006
(51) Int. Cl.: F02B 27/02, F02D 9/10, F02M 35/10, F02M 35/112

(54) **Engine intake control device**
Motoreinlasssteuervorrichtung
Dispositif de commande d'admission d'un moteur

(30) Priority: 04.07.2005 JP 2005195260; 04.07.2005 JP 2005195261
(43) Date of publication of application: 31.01.2007
(73) Proprietor: Keihin Corporation, Tokyo 163-0539 (JP); Honda Motor Co., Ltd., Minato-ku Tokyo 107-8556 (JP)
(72) Inventor: Noguchi, Itaru c/o Tochigi Dev. Cent. of Keihin Corp., Tochigi 329-1233 (JP); Yamada, Kenichi c/o Tochigi Dev. Cent. of Keihin Corp., Tochigi 329-1233 (JP); Takahashi, Kenji c/o Tochigi Dev. Cent. of Keihin Corp, Tochigi 329-1233 (JP); Fukuda, Shojiro c/o Tochigi Dev. Cent. of Keihin Corp, Tochigi 329-1233 (JP); Konishi, Yasunori c/o Honda R&D Co., Ltd., Wako-shi Saitama 351-0193 (JP); Uto, Hajime c/o Honda R&D Co., Ltd., Wako-shi Saitama 351-0193 (JP); Akima, Kazuhiro c/o Honda R&D Co., Ltd., Wako-shi Saitama 351-0193 (JP); Umino, Yoshiyuki c/o Honda R&D Co., Ltd., Wako-shi Saitama 351-0193 (JP); Matsuura, Yasushi c/o Honda R&D Co., Ltd., Wako-shi Saitama 351-0193 (JP); Akiyama, Yoshihiro c/o Honda R&D Co., Ltd., Wako-shi Saitama 351-0193 (JP); Omata, Hisakazu c/o Nikken Co., Ltd., Shibuya-ku Tokyo 150-0031 (JP)
(74) Representative: Prechtel, Jörg

(56) References cited:
- EP-A2- 1 028 238
- EP-A2- 1 270 957
- WO-A1-96/31692
- DE-A1- 19 936 470
- JP-A- 2003 138 944
- US-B1- 6 446 591

## Description

### BACKGROUND OF THE INVENTION

### Field of the Invention

The present invention relates to improvement of an engine intake control device according to the preamble of claim 1. An engine intake control device of the generic kind is known from DE 199 36 470 A1. There is also known an engine intake control device comprising: an intake manifold made of a synthetic resin; a butterfly-type switching valve which is mounted in the intake manifold and capable of switching over an interior of the intake manifold between a low-speed intake mode that is adapted for low-speed driving of an engine and a high-speed intake mode that is adapted for high-speed driving of the engine, by opening and closing a plurality of intake paths in the intake manifold; and an actuator which operates the switching valve.

### Description of the Related Art

Such an engine intake control device is already known as disclosed in Japanese Patent Application Laid-open No. 8-277717.

Since, in such a conventional engine intake control device, a switching valve is incorporated into the device in an assembly process of an intake manifold which is divided into a plurality of parts, it is impossible to assemble the intake manifold and the switching valve in parallel, leading to a poor assemblability.

### SUMMARY OF THE INVENTION

The present invention has been achieved in view of the above-described situation, and has an object to provide an engine intake control device in which parallel assembling of an intake manifold and a switching valve is possible to provide a good assemblability, and a good operating state of the switching valve is always secured in a state in which the switching valve is mounted in the intake manifold.

In order to achieve the above object, according to a first feature of the present invention according to claim 1, there is provided an engine intake control device comprising: an intake manifold made of a synthetic resin; a butterfly-type switching valve which is mounted in the intake manifold and capable of switching over an interior of the intake manifold between a low-speed intake mode that is adapted for low-speed driving of an engine and a high-speed intake mode that is adapted for high-speed driving of the engine, by opening and closing a plurality of intake paths in the intake manifold; and an actuator which operates the switching valve, wherein the switching valve comprises: a valve case which has a plurality of valve holes and is fastened to an inner wall of the intake manifold with fastening members at a plurality of spots so that the valve holes are connected to the intake paths; a valve stem which is rotatably supported by the valve case while crossing the valve holes and which is connected to the actuator; and a plurality of valve plates which is mounted on the valve stem so as to open and close the valve holes, and wherein at portions of the valve case and the intake manifold between the plurality of fastening spots, the valve case is formed of a material which has a higher rigidity than that of the intake manifold.

The actuator corresponds to an electric motor 30 in an embodiment of the present invention, and the intake path corresponds to a second intake path 12 in the embodiment.

With the first feature of the present invention, since the butterfly-type switching valve comprising the valve case, the valve stem and the valve plate is assembled separately from the intake manifold made of a synthetic resin, the parallel assembling of the intake manifold and the switching valve becomes possible, thereby improving the assemblability of the device.

Moreover, since the rigidity of the valve case between the plurality of fastening spots is larger than the rigidity of the intake manifold between the plurality of fastening spots, even if there are some manufacturing errors in their mating surfaces at the time of fastening together the valve case and the intake manifold, distortion is generated in the intake manifold side because of a fastening force. Therefore, distortion is hardly generated in the valve case, and it is possible to avoid increase of frictional resistance, thereby always securing smooth rotating operation of the valve stem by the actuator.

According to a second feature of the present invention, in addition to the first feature, a plurality of vertical ribs which extend between the plurality of fastening spots and a plurality of horizontal ribs which intersect the vertical ribs are integrally formed with the valve case.

With the second feature of the present invention, the rigidity of the valve case is effectively enhanced at the plurality of fastening spots, thereby reliably preventing distortion of the valve case at the time of fastening together the valve case and the intake manifold.

According to a third feature of the present invention, in addition to the second feature, the valve case is formed by casting.

With the third feature of the present invention, it is possible to more effectively reinforce the rigidity of the valve case between the plurality of fastening spots.

According to a fourth feature of the present invention, in addition to any one of the first to third features, the valve case is a single member which is common to all the valve plates; and the valve case is fastened to the intake manifold at two spots at opposite ends along an axial direction of the valve stem.

With the fourth feature of the present invention, since the single valve case is fastened to the intake manifold at two points of opposite ends thereof, it becomes possible to arrange the plurality of valve holes of the valve case close to each other without being obstructed by the fastening portions, thereby downsizing the valve case, and thus downsizing the intake manifold.

According to a fifth feature of the present invention, in addition to any one of the first to fourth features, the synthetic resin intake manifold comprises: a mounting flange portion which is fastened to the engine with a plurality of fastening members, and has a plurality of air outlets connected to inlet ports of the engine; a tank portion which is arranged away from the mounting flange portion so as to avoidmountingpaths of the fasteningmembers, and has a surge chamber which introduces therein atmospheric air; a pipe line portion which is connected between the tank portion and the mounting flange portion, and has a plurality of intake paths providing communication between the surge chamber and the air outlets; and bridging portions which are provided between the mounting flange portion and the tank portion and which integrally connect opposite ends thereof, wherein one of the bridging portions which integrally connects together one end portions of the mounting flange portion and the tank portion comprises a short tube portion which has an introducing path which introduces atmospheric air into the surge chamber.

With the fifth feature of the present invention, since one of the bridging portions of the intake manifold comprises the high-rigidity short tube portion having the introducing path for introducing atmospheric air into the surge chamber, the mounting flange portion can firmly support the tank portion in a state in which the mounting flange portion is mounted to the engine. Therefore, during the operation of the engine, it is possible to greatly prevent vibration of the tank portion, thereby suppressing noise generation, and thus preventing reduction of the durability of each part due to the vibration. Further, also the short tube portion serves as a bridging portion, thereby simplifying the structure. Furthermore, since the short tube portion has a comparatively large sectional area, a molten resin flows into the tank portion through the short tube portion at the time of injection molding of an intake manifold, thereby improving moldability.

According to a sixth feature of the present invention, in addition to the fifth feature, the other of the bridging portions which integrally connects together the other end portions of the mounting flange portion and the tank portion is formed to have a U-shaped section.

With the sixth feature of the present invention, it is possible to effectively enhance the rigidity of the other bridging portion of the intake manifold to balance the rigidity of the other bridging portion with the rigidity of the short tube portion, thereby further enhancing the support of the tank portion by the mounting flange portion.

The above-mentioned object, other objects, characteristics, and advantages of the present invention will become apparent from a preferable embodiment which will be described in detail below by reference to the attached drawings.

### BRIEF DESCRIPTION OF THE DRAWINGS

FIG. 1 is a side view showing an intake control device according to an embodiment of the present invention in a state in which the intake control device is mounted on an engine.
FIG. 2 is a sectional view taken along line 2-2 in FIG. 1.
FIG. 3 is a drawing in view of a direction shown by arrow 3 in FIG. 1.
FIG. 4 is a sectional view taken along line 4-4 in FIG. 1.
FIG. 5 is a sectional view taken along line 5-5 in FIG. 2 (showing an interior of the intake manifold in a low-speed intake mode).

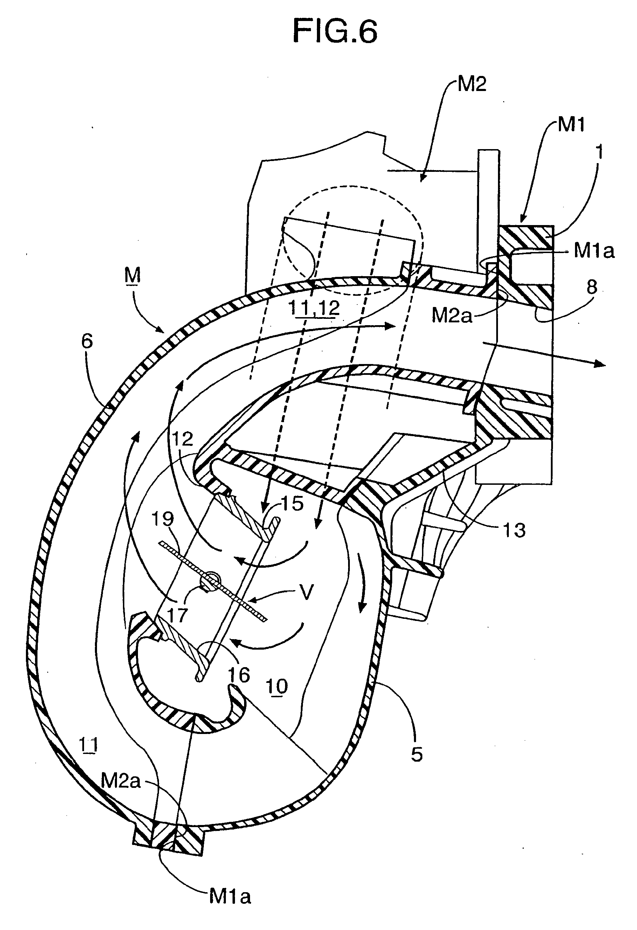

FIG. 6 is a drawing which shows an interior of the intake manifold in a high-speed intake mode and corresponds to FIG. 5.
FIG. 7 is a view showing an inner surface of a first block of the intake manifold.
FIG. 8 is a view showing an inner surface of a second block of the intake manifold.
FIG. 9 is a sectional view taken along line 9-9 in FIG. 7.
FIG. 10 is a bottom view of a butterfly-type switching valve mounted in the intake manifold.
FIG. 11 is a side view of the switching valve.

### DESCRIPTION OF THE PREFERRED EMBODIMENT

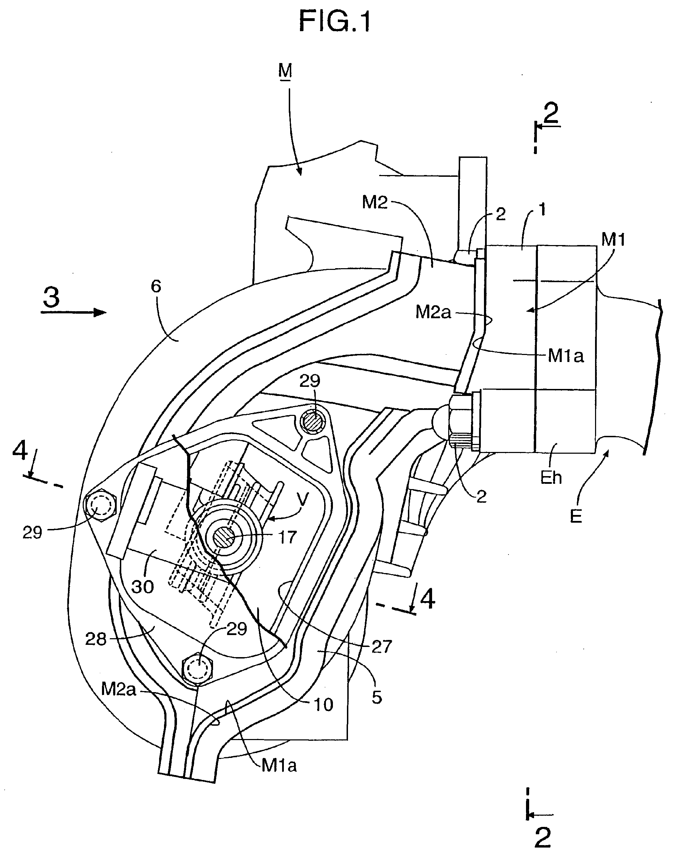

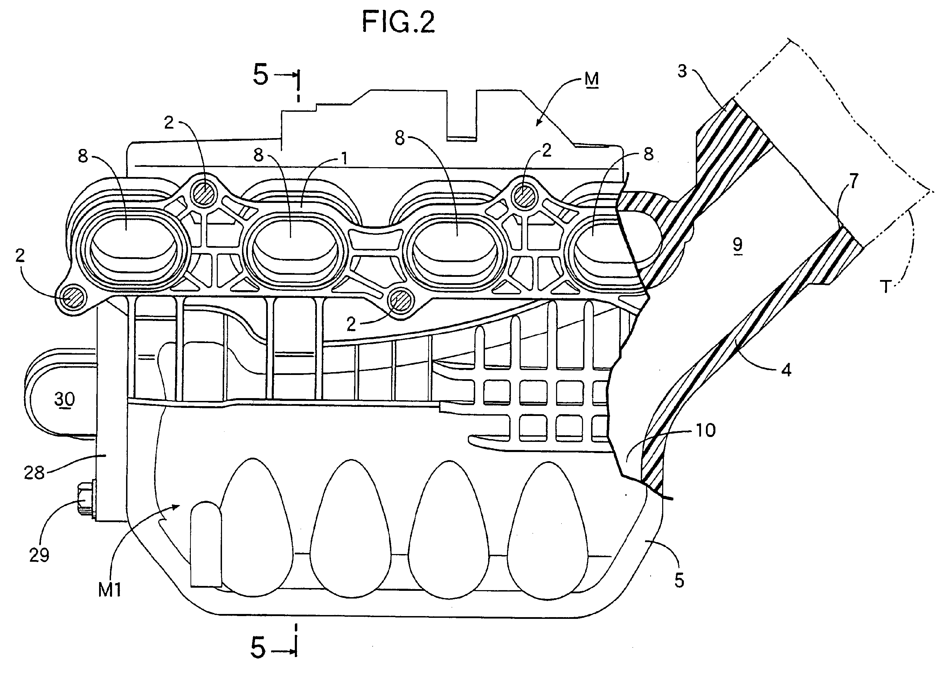

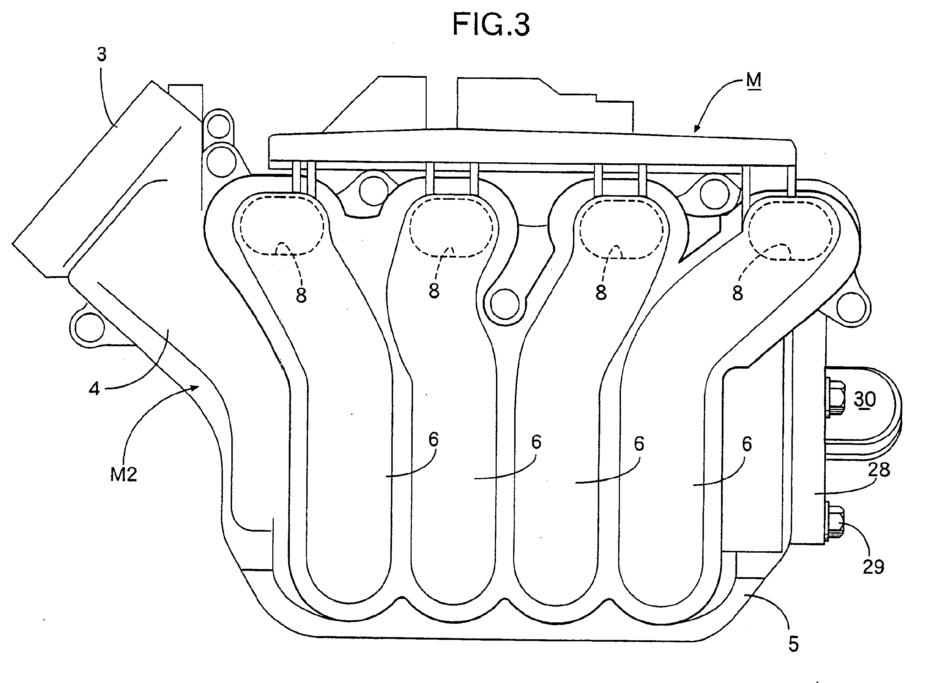

First, in FIGS. 1 to 3, an intake manifold M made of a synthetic resin is mounted in a cylinder head Eh of an engine E. The intake manifold M is used for a 4-cylinder engine in the illustrated example, and comprises: a mounting flange portion 1 fastened to the cylinder head Eh of the engine E with a plurality of fastening bolts 2; a small flange portion 3 which is arranged in an outside of one end portion of the mounting flange portion 1 while forming an angle (an approximately right angle in the illustrated example) and on which a throttle body T is mounted; a short tube portion 4 which extends downward from the small flange portion 3; a tank portion 5 which is connected to a lower edge portion of the short tube portion 4; and four pipe line portions 6 which extend from a lower portion of the tank portion 5 and extends upward along a rear face of the tank portion 5 to be connected to the flange portion 1 and which are mutually connected. The tank portion 5 and the pipe line portions 6 share a boundary wall therebetween. The tank portion 5 is arranged below the mounting flange portion 1 while avoiding mounting paths of the fastening bolts 2.

As shown in FIGS. 1 to 5, an air inlet 7 leading to an intake path of the throttle body T is opened in an end face of the small flange portion 3, and four air outlets 8 respectively leading to four inlet ports of the cylinder head Eh are opened in an end face of the mounting flange portion 1. An introducing path 9 whose one end leads to the air inlet 7 is formed in the short tube portion 4, and a large-volume surge chamber 10 leading to the other end of the introducing path 9 is formed in the tank portion 5. First intake paths 11 which cause the surge chamber 10 to communicate with the air outlets 8 are formed in the pipe line portions 6.

In addition, formed in the tank portion 5 are four second intake paths 12 which cause the surge chamber 10 to communicate with intermediate portions of the first intake paths 11 and which include downstream portions of the first intake paths 11 as their downstream portions. Therefore, a flow path length of the second intake paths 12 from the surge chamber 10 to the air outlets 8 is shorter than a flow length of the first intake paths 11.

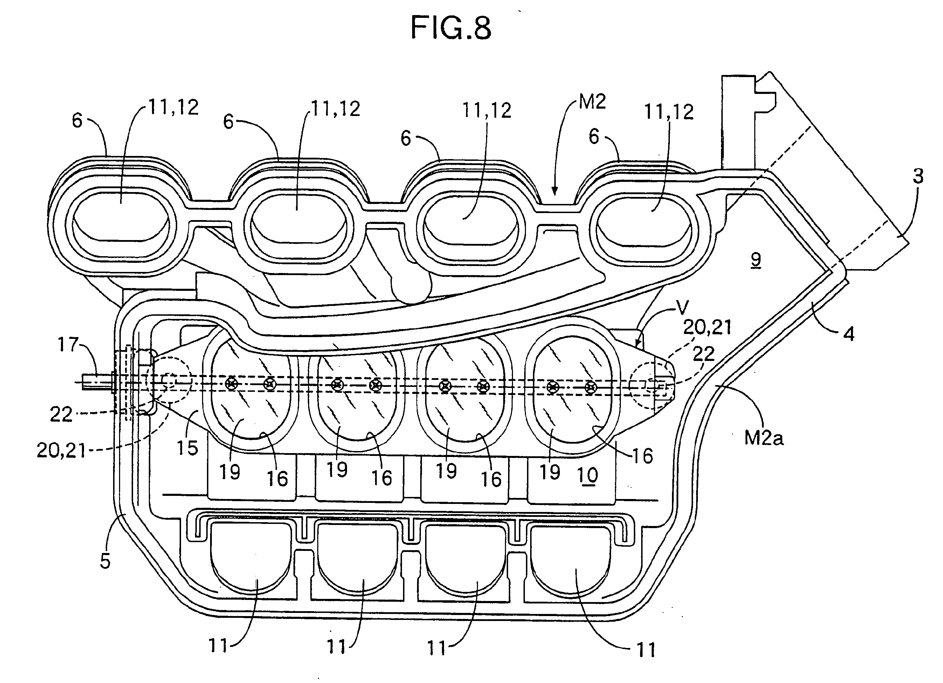

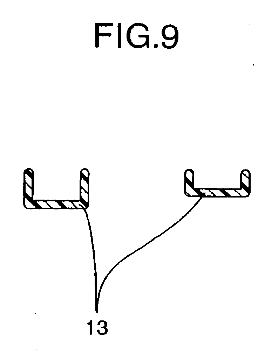

In order to facilitate formation of the intake manifold M having the above-mentioned construction, the intake manifold M is divided into at least two blocks shown in FIGS. 8 and 9, that is, first and second blocks M1 and M2 which are respectively injection-molded with a synthetic resin. At that time, the mounting flange portion 1, a half portion of the short tube portion 4, a half portion of the tank portion 5, and an inlet port portion of the pipe line portions 6 are formed in the first block M1. In the second block M2, the small flange portion 3, the other half portion of the short tube portion 4, the other half portion of the tank portion 5, and the remaining main parts of the pipe line portions 6 are formed. Then, the blocks M1 and M2 are vibration-welded to each other on their divided faces M1a and M2a. Atthattime, although top portions of the pipe line portions 6 of the second block M2 are welded to the mounting flange portion 1 of the first block M1, the pipe line portions 6 are arranged so as to avoid the mounting paths of the fastening bolts 2.

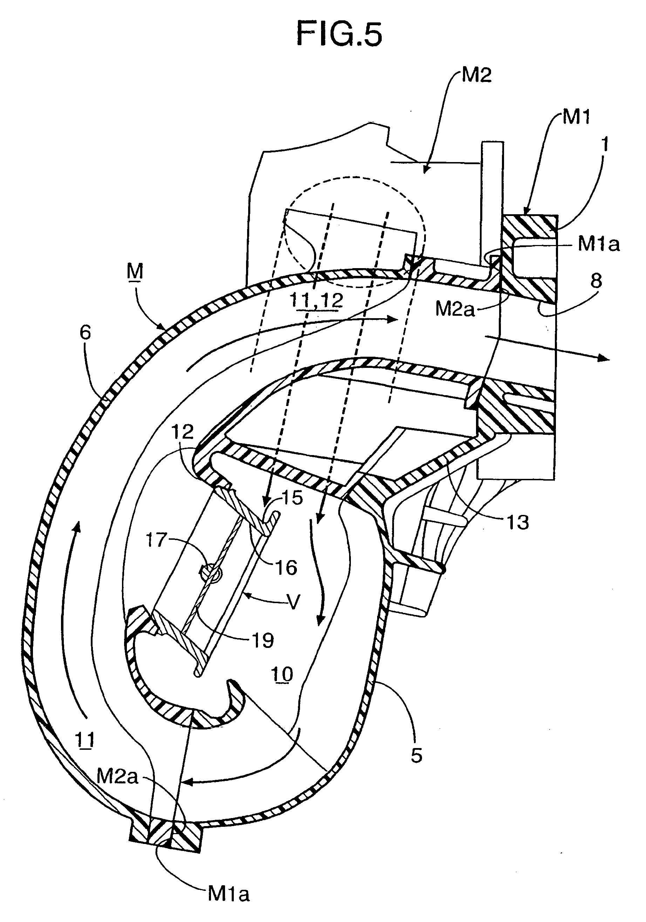

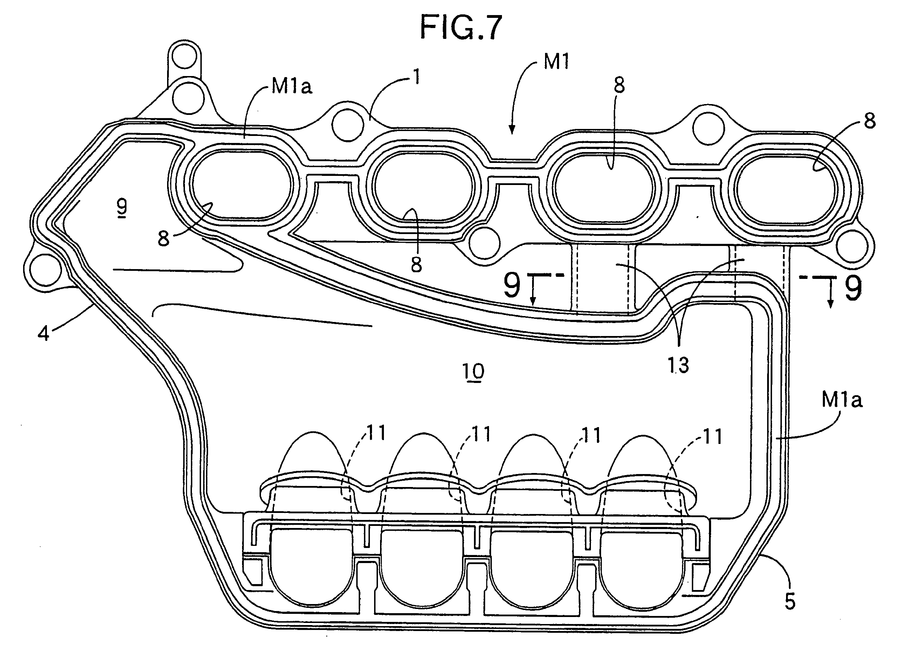

As shown in FIG. 7, since the mounting flange portion 1 and the tank portion 5 are connected to each other through the short tube portion 4 arranged in their one end portions, the tank portion 5 largely overhangs from the mounting flange portion 1. Therefore, a pair of bridging portions 13 providing connection between the mounting flange portion 1 and the tank portion 5 on a side opposite to the short tube portion 4 are integrally formed with the first block M1 (see FIGS. 5, 7 and 9). The bridging portion 13 has a U-shaped section in order to enhance its flexural rigidity as much as possible. Thus, also the short tube portion 4 serves as abridging portion which integrally connects together the one end portions of the mounting flange portion 1 and the tank portion 5.

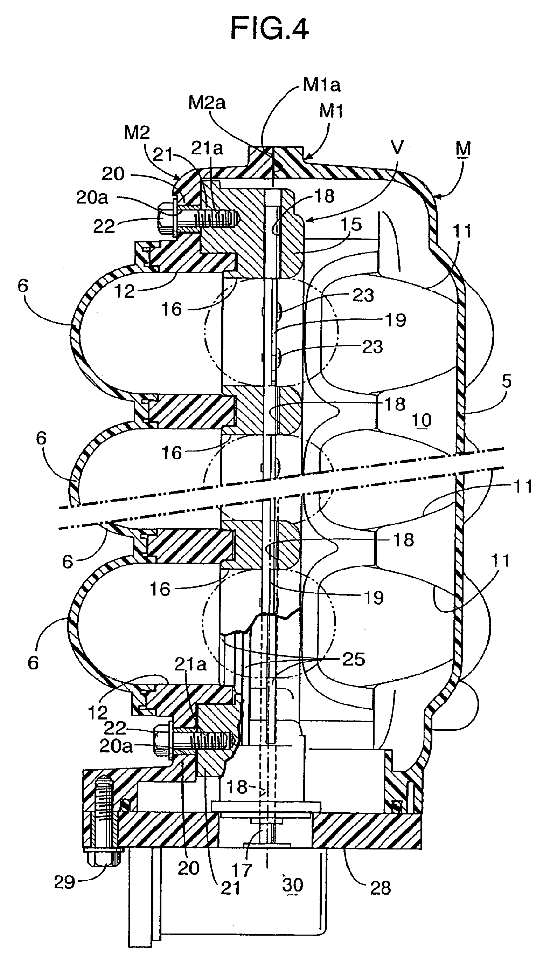

As shown in FIGS. 4, 5 and 8, in the second block M2, a butterfly-type switching valve V which opens and closes all together inlet ports of the second intake paths 12 is mounted in an inner wall of the tank portion 5. The switching valve V has a common valve case 15 which is arranged in the inlet ports of the second intake paths 12. The valve case 15 is made by casting a light alloy such as aluminum, and has four elliptical valve holes 16 arranged in line in an arranging direction of the second intake paths 12 so as to be connected to the inlet ports of the second intake paths 12. One valve stem 17 arranged so as to cross these valve holes 16 is rotatably supported by the valve case 15. Therefore, bearing holes 18 supporting the valve stem 17 are formed in an end wall of the valve case 15 and bulkheads between the respective valve holes 16.

A plurality of elliptical valve plates 19 are fixed to the valve stem 17 with screws 23 in the respective valve holes 16. The valve plates 19 opens and closes the corresponding valve holes 16 by the reciprocation of the valve stem 17. The switching valve V constituted in this way is assembled separately from the intake manifold M.

As clearly shown in FIG. 4, a pair of supporting bosses 20 and 20 which are arranged on opposite sides along an arranging direction of the second intake path 12 and which project into the second block M2 are integrally formed with the second block M2. The respective supporting bosses 20 and 20 have the bolt holes 20a and 20a which penetrate its central portion.

On the other hand, a pair of connecting bosses 21 and 21 whose end faces respectively abut on end faces of the supporting bosses 20 and 20 are integrally formed onone side of opposite longitudinally end portions of the valve case 15 along an axial direction of the valve stem 17. The respective connecting bosses 21 and 21 have, in their central portions, bottomed screw holes 21a and 21a which correspond to the bolt holes 20a and 20a. The fastening bolts 22 are passed through the bolt holes 20a and 20a from outside the second block M2, and screwed into and fastened to the screw holes 21a and 21a, thereby fastening the valve case 15 on an inside wall of the second block M2.

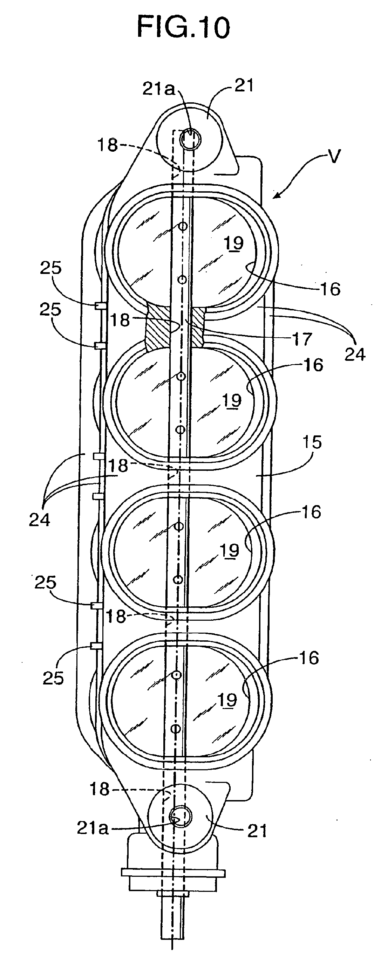

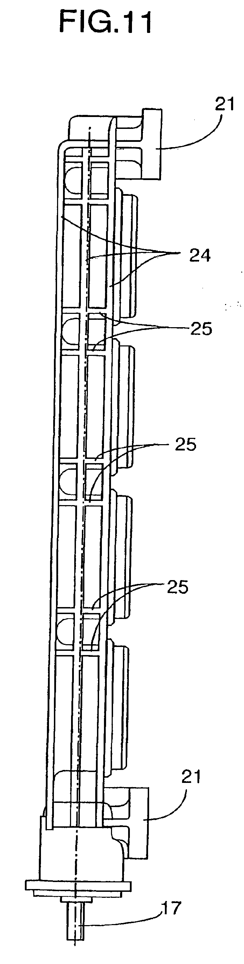

As clearly shown in FIGS. 10 and 11, on both the outer side faces of the valve case 15, a plurality of vertical ribs 24 which extends in the axial direction of the valve stem 17 to extend over between the pair of connecting bosses 21 and 21, and a plurality of horizontal ribs 25 which intersect the vertical ribs 24 are integrally formed. The ribs 24 and 25 enhance the rigidity of the valve case 15 between the pair of connecting bosses 21 and 21, the rigidity being made larger than the rigidity of the second block M2 between the pair of supporting bosses 20 and 20.

Referring again to FIGS. 1 and 4, an insertion port 27 which allows insertion of the switching valve V into the tank portion 5 is opened in the one end wall of the second block M2, and a lid 28 which closes the insertion port 27 is fastened to the second block M2 with a plurality of bolts 29. An electric motor 30 having a deceleration mechanism which is connected to one end portion of the valve stem 17 to rotate the valve stem 17 is attached to the lid 28.

Next, operation of this embodiment will be described.

During low-speed driving of the engine E, the switching valve V is held by the electric motor 30 in a valve-closing state. That is, the valve plates 19 close the valve holes 16 to close inlet ports of the second intake paths 12. Consequently, in an intake stroke of each cylinder of the engine E, air whose flow rate has been controlled by the throttle body T flows through the introducing path 9 into the surge chamber 10, and is then supplied to the engine E through the first intake paths 11 having a long path length. Therefore, the interior of the intake manifoldMbecomes a low-speed intake mode which is adapted for low-speed driving, thereby enhancing low-speed output performance of the engine E. Also, during low-speed driving of the engine E, the electric motor 30 switches the switching valve V into a valve-opening state to open the valve holes 16 by the valve plates 19, thereby bringing the second intake paths 12 into a communicated state. Consequently, in an intake stroke of each cylinder of the engine E, air whose flow rate has been controlled by the throttle body T flows through the introducingpath 9 into the surge chamber 10, and is then supplied to the engine E mainly through the second intake paths 12 having a short path length. Therefore, the interior of the intake manifold M becomes a high-speed intake mode which is adapted for high-speed driving, thereby enhancing high-speed output performance of the engine E.

In assembling of the above-described engine intake control device, the intake manifold M and the switching valve V are assembled respectively in separated processes; the switching valve V is put into the tank portion 5 through the insertion port 27 of the intake manifold M; the fastening bolts 22 are passed through the bolt holes 20a and 20a from outside the second block M2, and screwed into and fastened to the screw holes 21a and 21a; the lid 28 is joined to the intake manifold M to close the insertion port 27; and the valve stem 17 is connected to the electric motor 30 provided on the lid 28, thereby completing the assembly. This parallel assembling of the intake manifold M and the switching valve V remarkably improves the assemblability of the device.

Further, since the fastening spots where the valve case 15 is fastened to the intake manifold M with the fastening bolts 22 are two points at opposite ends of the valve case 15, it becomes possible to arrange the four valve holes 16 close to each other without being obstructed by the fastening portions, thereby downsizing the valve case 15, and thus downsizing the intake manifold M.

Furthermore, the plurality of vertical ribs 24 which extends in the axial direction of the valve stem 17 to extend over between the pair of connecting bosses 21 and 21, and the plurality of horizontal ribs 25 which intersect the vertical ribs 24 are integrally formed in the valve case 15, and the rigidity of the valve case 15 between the pair of connecting bosses 21 and 21 is made larger than the rigidity of the intake manifold M between the pair of supporting bosses 20 and 20. Therefore, even if there are some manufacturing errors of parallelism or the like in abutting surfaces of both the supporting bosses 20 and the connecting 21, at the time of fastening of the supporting bosses 20 and 20 and the connecting bosses 21 and 21 with the fastening bolts 22, distortion is generated in the intake manifold M side because of a fastening force. Thus, distortion is hardly generated in the valve case, and it is possible to prevent deformation of the bearing holes 18 and mutual positional displacement among the bearing holes 18, thereby avoiding increase of frictional resistance between the valve stem 17 and the inner circumferential surfaces of the bearing holes 18, and hence always securing smooth rotating operation of the valve stem 17 by the electric motor 30.

Moreover, the tank portion 5 forming the surge chamber 10 is arranged below the mounting flange portion 1 while avoiding the mounting paths of the fastening bolts 2, the mounting flange portion 1 being fastened to the cylinder head Eh of the engine E with the plurality of fastening bolts 2. Therefore, it is possible to easily mount the mounting flange portion 1 in the cylinder head Eh without being obstructed by the tank portion 5. Further, the bridging portions 4 and 13 which connect together respective opposite ends of both the mounting flange portion 1 and the tank portion 5 are integrally formed respectively in the mounting flange portion 1 and the tank portion 5, and in particular, the one bridging portion 4 comprises the short tube portion 4 having a high rigidity which forms the introducing path 9 for introducing air from the throttle body T into the surge chamber 10 inside the tank portion 5. Therefore, in a mounting state in which the mounting flange portion 1 is mounted to the cylinder head Eh, the mounting flange portion 1 can firmly support the tank portion 5 through the bridging portions 4 and 13. Thus, during the operation of the engine, it is possible to greatlyprevent vibration of the tank portion 5, thereby suppressing noise generation, and thus preventing reduction of the durability of each part due to the vibration. Further, also the short tube portion 4 serves as a bridging portion, thereby simplifying the structure.

Moreover, since the other bridging portion 13 is constituted by arranging a pair of parts having a U-shaped section, it is possible to balance its rigidity with the rigidity of the short tube portion 4, thereby further enhancing the support of the tank portion 5 by the mounting flange portion 1.

Also, since the short tube portion 4 and the bridging portion 13 respectively have a comparatively large sectional area, a molten resin flows from the mounting flange portion 1 through the short tube portion 4 and the bridging portion 13 into the entire tank portion 5, at the time of injection molding of the intake manifold M, thereby improving moldability.

The present invention is not limited to the above-mentioned embodiment, and various changes in design can be made thereto without deviating from the scope of the claims. For example, the present invention is also applicable to any multiple cylinder engine other than the above-mentioned four-cylinder engine.

An engine intake control device includes an intake manifold (M) made of a synthetic resin, and a butterfly-type switching valve (V) which is mounted in the intake manifold (M) and capable of switching over an interior of the intake manifold (M) between a low-speed intake mode that is adapted for low-speed driving of an engine (E) and a high-speed intake mode that is adapted for high-speed driving of the engine (E). The switching valve (V) includes: a valve case (15) which has a plurality of valve holes (16) and is fastened to an inner wall of the intake manifold (M) at two spots at its opposite ends; a valve stem (17) which is rotatably supported by the valve case (15); and a plurality of valve plates (19) which is mounted on the valve stem (17) so as to open and close the valve holes (16).

Rigidity of the valve case (15) between the plurality of fastening spots is made larger than rigidity of the intake manifold (M) between the spots. Thus, parallel assembling of the intake manifold (M) and the switching valve (V) becomes possible, and the assemblability becomes excellent. Furthermore, it is possible to always secure a good operating state of the switching valve (V), in a state in which the switching valve (V) is mounted in the intake manifold (M).

## Claims

1. An engine intake control device comprising:
an intake manifold (M) made of a synthetic resin and having a plurality of first intake paths (11) and a plurality of second intake paths (12), the first and second intake paths being formed inside of the intake manifold (M), respectively, and having flow path lengths different from each other;
a butterfly-type switching valve (V) which is mounted in the intake manifold (M) and capable of switching over an interior of the intake manifold (M) between a low-speed intake mode that is adapted for low-speed driving of an engine (E) and a high-speed intake mode that is adapted for high-speed driving of the engine (E), by opening and closing the second intake paths (12); and
an actuator (30) which operates the switching valve (V),
wherein the switching valve (V) comprises:
a valve case (15) which has a plurality of valve holes (16) and is fastened to an inner wall of the intake manifold (M) so that the valve holes (16) are connected to the second intake paths (12);
a valve stem (17) which is rotatably supported by the valve case (15) while crossing the valve holes (16) and which is connected to the actuator (30); and
a plurality of valve plates (19) which is mounted on the valve stem (17) so as to open and close the valve holes (16), and
wherein an insertion port (27) which allows insertion of the switching valve (V) into the intake manifold (M) in an arranging direction of the plurality of second intake paths (12) is opened in the intake manifold (M), and rigidity of the valve case (15) is made larger than rigidity of the intake manifold (M), **characterized by** a plurality of bolt holes (20a) being provided in the intake manifold (M) so as to open to the inner wall of the intake manifold (M) while a plurality of screw holes (21a) corresponding to the bolt holes (20a) being provided in the valve case (15), so that fastening bolts (22) passed through the bolt holes (20a) from outside of the intake manifold (M) are screwed into and fastened to the screw holes (21 a), thereby fastening the valve case (15) onto the inner wall of the intake manifold.

2. The engine intake control device according to claim 1, wherein a plurality of vertical ribs (24) which extend between the plurality of fastening spots and a plurality of horizontal ribs (25) which intersect the vertical ribs (24) are integrally formed with the valve case (15).

3. The engine intake control device according to claim 2, wherein the valve case (15) is formed by casting.

4. The engine intake control device according to any one of claims 1 to 3, wherein the valve case (15) is a single member which is common to all the valve plates (19); and the valve case (15) is fastened to the intake manifold (M) at two spots at opposite ends along an axial direction of the valve stem (17).

5. The engine intake control device according to any one of claims 1 to 4, wherein the synthetic resin intake manifold (M) comprises: a mounting flange portion (1) which is fastened to the engine (E) with a plurality of fastening members (2), and has a plurality of air outlets (8) connected to inlet ports of the engine (E); a tank portion (5) which is arranged away from the mounting flange portion (1) so as to avoid mounting paths of the fastening members (2), and has a surge chamber (10) which introduces therein atmospheric air; a pipe line portion (6) which is connected between the tank portion (5) and the mounting flange portion (1), and has a plurality of intake paths (11) providing communication between the surge chamber (10) and the air outlets (8); and bridging portions (4, 13) which are provided between the mounting flange portion (1) and the tank portion (5) and which integrally connect opposite ends thereof,
wherein one of the bridging portions (4) which integrally connects together one end portions of the mounting flange portion (1) and the tank portion (5) comprises a short tube portion (4) which has an introducing path (9) which introduces atmospheric air into the surge chamber (10).

6. The engine intake control device according to claim 5, wherein the other of the bridging portions (13) which integrally connects together the other end portions of the mounting flange portion (1) and the tank portion (5) is formed to have a U-shaped sectional shape.

## Patentansprüche

1. Motoreinlass-Steuervorrichtung, umfassend:
einen Einlasskrümmer (M), der aus Kunstharz hergestellt ist und eine Mehrzahl von ersten Einlasswegen (11) und eine Mehrzahl von zweiten Einlasswegen (12) aufweist, wobei die ersten und zweiten Einlasswege jeweils innerhalb des Einlasskrümmers (M) ausgebildet sind und voneinander unterschiedliche Strömungsweglängen haben;
ein Klappen-Schaltventil (V), das in dem Einlasskrümmer (M) angebracht und in der Lage ist, einen Innenraum des Einlasskrümmers (M) zwischen einem Niederdrehzahleinlass-Modus, der für Niederdrehzahlbetrieb eines Motors (E) ausgelegt ist, und einem Hochdrehzahleinlass-Modus, der für Hochdrehzahlbetrieb des Motors (E) ausgelegt ist, durch Öffnen und Schließen der zweiten Einlasswege (12) umzuschalten; und
einen Aktuator (30), der das Schaltventil (V) betätigt,
worin das Schaltventil (V) aufweist:
ein Ventilgehäuse (15), das eine Mehrzahl von Ventillöchern (16) aufweist und an einer Innenwand des Einlasskrümmers (M) derart befestigt ist, dass die Ventillöcher (16) mit den zweiten Einlasswegen (12) verbunden sind;
einen Ventilschaft (17), der an dem Ventilgehäuse (15) drehbar gelagert ist, während er die Ventillöcher (16) quert, und der mit dem Aktuator (30) verbunden ist; und
eine Mehrzahl von Ventilklappen (19), die an dem Ventilschaft (17) angebracht sind, um die Ventillöcher (16) zu öffnen und zu schließen, und
worin eine Einsetzöffnung (27), die das Einsetzen des Schaltventils (V) in den Einlasskrümmer (M) in einer Anordnungsrichtung der Mehrzahl von Einlasswegen (12) erlaubt, sich in den Einlasskrümmer (M) öffnet, und die Steifigkeit des Ventilgehäuses (15) größer gemacht ist als die Steifigkeit des Einlasskrümmers (M),
**dadurch gekennzeichnet, dass** eine Mehrzahl von Bolzenlöchern (20a) in dem Einlasskrümmer (M) so vorgesehen sind, dass sie sich zur Innenwand des Einlasskrümmers (M) öffnen, während eine Mehrzahl von Schraublöchern (21 a) entsprechend den Bolzenlöchern (20a) in dem Ventilgehäuse (15) vorgesehen ist, so dass Befestigungsbolzen (22), die von außerhalb des Einlaskrümmers (M) durch die Bolzenlöcher (20a) hindurchtreten, in die Schraublöcher (21 a) geschraubt und dort befestigt werden, um hierdurch das Ventilgehäuse (15) an der Innenwand des Einlasskrümmers zu befestigen.

2. Die Motoreinlass-Steuervorrichtung nach Anspruch 1, worin eine Mehrzahl von vertikalen Rippen (24), die sich zwischen der Mehrzahl von Befestigungspunkten erstrecken, und eine Mehrzahl von horizontalen Rippen (25), welche die vertikalen Rippen (24) schneiden, einstückig mit dem Ventilgehäuse (15) ausgebildet sind.

3. Die Motoreinlass-Steuervorrichtung nach Anspruch 2, worin das Ventilgehäuse (15) durch Gießen gebildet ist.

4. Die Motoreinlass-Steuervorrichtung nach einem der Ansprüche 1 bis 3, worin das Ventilgehäuse (15) ein einziges Element ist, das allen Ventilklappen (19) gemeinsam ist; und das Ventilgehäuse (15) an dem Einlasskrümmer (M) an zwei Punkten an entgegengesetzten Enden entlang einer axialen Richtung des Ventilschafts (17) befestigt ist.

5. Die Motoreinlass-Steuervorrichtung nach einem der Ansprüche 1 bis 4, worin der Kunstharz-Einlasskrümmer (M) aufweist: einen Montageflanschabschnitt (1), der an dem Motor (E) mit einer Mehrzahl von Befestigungselementen (2) befestigt ist und eine Mehrzahl von Luftauslässen (8) aufweist, die mit Einlassöffnungen des Motors (E) verbunden sind; einen Tankabschnitt (5), der mit Abstand von dem Montageflanschabschnitt (1) angeordnet ist, um Montagewege der Befestigungselemente (2) zu umgehen, und eine Ausgleichskammer (10) aufweist, die Atmosphärenluft dort hinein einführt; einen Rohrleitungsabschnitt (6), der zwischen dem Tankabschnitt (5) mit dem Montageflanschabschnitt (1) angeschlossen ist und eine Mehrzahl von Einlasswegen (11) aufweist, die eine Verbindung zwischen der Ausgleichskammer (10) und den Luftauslässen (8) herstellt; und Brückenabschnitte (4, 13), die zwischen dem Montageflanschabschnitt (1) und dem Tankabschnitt (5) vorgesehen sind und die deren entgegengesetzte Enden einstückig verbinden,
worin einer der Brückenabschnitte (4), der einen Endabschnitt des Montageflanschabschnitts (1) mit dem Tankabschnitt (5) einstückig verbindet, einen kurzen Rohrabschnitt (4) aufweist, der einen Einführweg (9) hat, der Atmosphärenluft in die Ausgleichskammer (10) einführt.

6. Die Motoreinlass-Steuervorrichtung nach Anspruch 5, worin der andere der Brückenabschnitte (13), der die anderen Endabschnitte des Montageflanschabschnitts (1) mit dem Tankabschnitt (5) einstückig verbindet, so ausgebildet ist, dass er eine U-förmige Querschnittsform hat.

## Revendications

1. Dispositif de commande d'admission de moteur comprenant:
un collecteur d'admission (M) fait d'une résine synthétique et ayant une pluralité de premiers chemins d'admission (11) et une pluralité de deuxièmes chemins d'admission (12), les premiers et les deuxièmes chemins d'admission étant formés à l'intérieur du collecteur d'admission (M), respectivement, et ayant des longueurs de chemin d'écoulement différentes l'une de l'autre;
une vanne de commutation de type papillon (V) qui est montée dans le collecteur d'admission (M) et est capable de commuter une partie intérieure du collecteur d'admission (M) entre un mode d'admission basse vitesse qui est conçu pour la commande d'un moteur (E) à basse vitesse et un mode d'admission haute vitesse qui est conçu pour la commande du moteur (E) à haute vitesse, par l'ouverture et la fermeture des deuxièmes chemins d'admission (12); et
un actionneur (30) qui actionne la vanne de commutation (V),
dans lequel la vanne de commutation (V) comprend:
un corps de vanne (15) qui a une pluralité d'orifices de vanne (16) et est fixé à une paroi interne du collecteur d'admission (M) de façon à ce que les orifices de vanne (16) soient connectés aux deuxièmes chemins d'admission (12);
une tige de vanne (17) qui est supportée de manière permettant la rotation par le corps de vanne (15) tout en traversant les orifices de vanne (16) et qui est connecté à l'actionneur (30); et
une pluralité de plaques porte-soupape (19) qui sont montées sur la tige de vanne (17) de façon à ouvrir et fermer les orifices de vanne (16), et
dans lequel un port d'insertion (27) qui permet l'insertion de la vanne de commutation (V) dans le collecteur d'admission (M) dans une direction d'arrangement de la pluralité de deuxièmes chemins d'admission (12) est ouvert dans le collecteur d'admission (M) et la rigidité du corps de vanne (15) est rendue plus grande que la rigidité du collecteur d'admission (M)
**caractérisé par** une pluralité de trous de boulons (20a) prévus dans le collecteur d'admission (M) de façon à ouvrir la paroi interne du collecteur d'admission (M), une pluralité de trous de boulons (21a) correspondant aux trous de boulons (20a) étant prévue dans le corps de vanne (15), de telle façon que les boulons de fixation (22) passant à travers les trous de boulons (20a) de l'extérieur du collecteur d'admission (M) sont vissés dans et fixés aux trous de boulons (21a), fixant ainsi le corps de vanne (15) sur la paroi interne du collecteur d'admission.

2. Dispositif de commande d'admission de moteur suivant la revendication 1, dans lequel une pluralité de nervures verticales (24) qui s'étendent entre la pluralité de points de fixation et une pluralité de nervures horizontales (25) qui intersectent les nervures verticales (24) sont formées d'un seul tenant avec le corps de vanne (15).

3. Dispositif de commande d'admission de moteur suivant la revendication 2, dans lequel le corps de vanne (15) est formé par moulage.

4. Dispositif de commande d'admission de moteur suivant l'une des revendications 1 à 3, dans lequel le corps de vanne (15) est un élément unique qui est commun à toutes les plaques porte-soupape (19); et le corps de vanne (15) est fixé au collecteur d'admission (M) en deux points à des extrémités opposées le long d'une direction axiale de la tige de vanne (17).

5. Dispositif de commande d'admission de moteur suivant l'une des revendications 1 à 4, dans lequel le collecteur d'admission en résine synthétique (M) comprend:
une partie bride de montage (1) qui est fixée au moteur (E) avec une pluralité d'éléments de fixation (2), et a une pluralité de sorties d'air (8) connectées aux ports d'entrée du moteur (E); une partie réservoir (5) qui est disposée à l'écart de la partie bride de montage (1) de façon à éviter les chemins de montage des éléments de fixation (2), et a une chambre d'équilibre (10) qui y introduit l'air atmosphérique; une partie tuyauterie (6) qui est connectée entre la partie réservoir (5) et la partie bride de montage (1), et a une pluralité de chemins d'admission (11) fournissant une communication entre la chambre d'équilibre (10) et les sorties d'air (8); et des parties de pontage (4, 13) qui sont prévues entre la partie bride de montage (1) et la partie réservoir (5) et qui connectent intégralement des extrémités opposées de celles-ci,
dans lequel une des parties de pontage (4) qui connecte ensemble d'un seul tenant des parties d'extrémité de la partie bride de montage (1) et de la partie réservoir (5) comprend une courte partie tube (4) qui a un chemin d'introduction (9) qui introduit de l'air atmosphérique dans la chambre d'équilibre (10).

6. Dispositif de commande d'admission de moteur suivant la revendication 5, dans lequel l'autre partie de pontage (13) qui connecte ensemble d'un seul tenant les autres parties d'extrémité de la partie bride de montage (1) et de la partie réservoir (5) est formée pour avoir une section en forme de U.
